(19) **Europäisches Patentamt / European Patent Office / Office européen des brevets**

(11) **EP 3 742 269 A1**

(12) **EUROPEAN PATENT APPLICATION**
published in accordance with Art. 153(4) EPC

(43) Date of publication:
**25.11.2020 Bulletin 2020/48**

(21) Application number: **18900885.7**

(22) Date of filing: **26.12.2018**

(51) Int Cl.:
***G06F 3/048*** (2013.01)

(86) International application number:
**PCT/CN2018/123990**

(87) International publication number:
**WO 2019/141055 (25.07.2019 Gazette 2019/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.01.2018 CN 201810054939**

(71) Applicant: **Tencent Technology (Shenzhen) Company Limited**
**Shenzhen City, Guangdong 518057 (CN)**

(72) Inventors:
• **HE, Ning**
  **Shenzhen city, Guangdong 518057 (CN)**
• **YANG, Yiqing**
  **Shenzhen city, Guangdong 518000 (CN)**
• **DENG, Yang**
  **Shenzhen city, Guangdong 518000 (CN)**

(74) Representative: **AWA Sweden AB**
**P.O. Box 11394**
**404 28 Göteborg (SE)**

(54) **VIEWING ANGLE ADJUSTMENT METHOD AND APPARATUS, STORAGE MEDIUM, AND ELECTRONIC APPARATUS**

(57)     A viewing angle adjustment method and apparatus, a storage medium, and an electronic apparatus, the method comprising: a terminal detects by means of a sensor on the terminal that the position of the terminal changes from a first position to a second position; when the terminal is in the first position, the terminal displays a first picture in a virtual scene at a first viewing angle, an object aiming identifier being displayed in the first picture (S202); determining a second viewing angle on the basis of the first position, the second position, and the first viewing angle, a first change amount of the first viewing angle to the second viewing angle corresponding to a second change amount of the first position to the second position (S204); when the terminal is in the second position, the terminal displays a second picture in a virtual scene at the second viewing angle, an object aiming identifier also being displayed in the second picture (S206). Thus, the technical problem in the viewing angle adjustment process of the high complexity of the viewing angle adjustment operation is solved.

A terminal detects, by using a sensor in the terminal, that the terminal moves from a first position to a second position, where the terminal displays a first image of a virtual scene at a first viewing angle when the terminal is located at the first position, and an object aiming identifier is displayed in the first image — S202

The terminal determines a second viewing angle according to the first position, the second position and the first viewing angle, where a first variation quantity from the first viewing angle to the second viewing angle relates to a second variation quantity from the first position to the second position — S204

The terminal displays a second image of the virtual scene at the second viewing angle when the terminal is located at the second position, where the object aiming identifier is also displayed in the second image — S206

**FIG. 2**

## Description

This application claims priority to Chinese Patent Application No. 2018100549394, entitled "VIEWING ANGLE ADJUSTMENT METHOD AND DEVICE, STORAGE MEDIUM, AND ELECTRONIC DEVICE" and filed with the Chinese Patent Office on January 19, 2018, which is incorporated by reference in its entirety.

## FIELD OF THE TECHNOLOGY

The present disclosure relates to the field of computers, and specifically, to a viewing angle adjustment method and a viewing angle adjustment device, a storage medium, and an electronic device.

## BACKGROUND OF THE DISCLOSURE

Currently, in an existing terminal application supported by a mobile terminal, a display viewing angle on the mobile terminal is generally adjusted according to a touchscreen position acquired by performing a screen sliding operation on a touchscreen by a user. For example, a screen sliding distance between the touchscreen position and an initial position before the screen sliding operation may be detected, and the mobile terminal may be controlled to adjust a display viewing angle according to the screen sliding distance, thereby displaying an image of a virtual scene at the adjusted viewing angle.

During the running of the terminal application, a preset task in the terminal application is normally completed by using both hands together. Therefore, when the above screen sliding operation is to be performed, it is normally required to suspend a current task temporarily to perform the screen sliding operation alone. That is, to perform the above adjusting of the displayed viewing angle, a stand-alone screen sliding operation is performed, which causes a problem of relatively high operation complexity of the viewing angle adjustment.

For the foregoing problem, no effective solution has been provided at present.

## SUMMARY

A viewing angle adjustment method, a viewing angle adjustment device, a storage medium, and an electronic device are provided according to embodiments of the present disclosure, to solve the technical problem of relatively high operation complexity of viewing angle adjustment in the related art.

According to an aspect of the embodiments of the present disclosure, a viewing angle adjustment method is provided. The method includes: detecting, by a terminal by using a sensor in the terminal, that the terminal moves from a first position to a second position, where the terminal displays a first image of a virtual scene at a first viewing angle when the terminal is located at the first position, and an object aiming identifier is displayed in the first image; determining, by the terminal, a second viewing angle according to the first position, the second position and the first viewing angle, where a first variation quantity from the first viewing angle to the second viewing angle relates to a second variation quantity from the first position to the second position; and displaying, by the terminal, a second image of the virtual scene at the second viewing angle when the terminal is located at the second position, where the object aiming identifier is also displayed in the second image.

According to another aspect of the embodiments of the present disclosure, a viewing angle adjustment device applied to a terminal is further provided. The device includes: a detection unit, configured to detect by using a sensor in the terminal, that the terminal moves from a first position to a second position, where the terminal displays a first image of a virtual scene at a first viewing angle when the terminal is located at the first position, and an object aiming identifier is displayed in the first image; a determining unit, configured to determine a second viewing angle according to the first position, the second position and the first viewing angle, where a first variation quantity from the first viewing angle to the second viewing angle relates to a second variation quantity from the first position to the second position; and a display unit, configured to display a second image of the virtual scene at the second viewing angle when the terminal is located at the second position, where the object aiming identifier is also displayed in the second image.

According to still another aspect of the embodiments of the present disclosure, a storage medium is further provided. The storage medium stores a program. The program is used to, when be executed, perform the foregoing viewing angle adjustment method.

According to still another aspect of the embodiments of the present disclosure, an electronic device is further provided. The electronic device includes a memory, a processor, and a computer program that is stored in the memory and executable by the processor. The processor is configured to perform the foregoing viewing angle adjustment method by executing the computer program.

In the embodiments of the present disclosure, the sensor in the terminal detects that the terminal moves from a first position to a second position, where the terminal displays the first image of the virtual scene at the first viewing angle when the terminal is located at the first position. The terminal determines the second viewing angle according to the first position, the second position and the first viewing angle, and displays the second image of the virtual scene at the second viewing angle. Therefore, the terminal can adjust the image of the virtual scene displayed at the viewing angle according to the position variation of the terminal, without requiring the use of both hands to perform the screen sliding operation to control the display viewing angle of the terminal, so as to simplify the viewing angle adjustment operation of the terminal. Therefore, the technical problem of relatively high operation complexity of viewing angle adjustment in the related art is solved.

## BRIEF DESCRIPTION OF THE DRAWINGS

The accompanying drawings described herein are used for providing further understanding for the present disclosure and constitute a part of the present disclosure. Exemplary embodiments of the present disclosure and descriptions thereof are used for explaining the present disclosure and do not constitute an improper limitation to the present disclosure. In the accompanying drawings:

FIG. 1 is a schematic diagram of an application environment of an optional viewing angle adjustment method according to an embodiment of the present disclosure;

FIG. 2 is a schematic flowchart of an optional viewing angle adjustment method according to an embodiment of the present disclosure;

FIG. 3 is a schematic diagram of an optional viewing angle adjustment method according to an embodiment of the present disclosure;

FIG. 4 is a schematic diagram of another optional viewing angle adjustment method according to an embodiment of the present disclosure;

FIG. 5 is a schematic diagram of still another optional viewing angle adjustment method according to an embodiment of the present disclosure;

FIG. 6 is a schematic diagram of still another optional viewing angle adjustment method according to an embodiment of the present disclosure;

FIG. 7 is a schematic diagram of still another optional viewing angle adjustment method according to an embodiment of the present disclosure;

FIG. 8 is a schematic diagram of still another optional viewing angle adjustment method according to an embodiment of the present disclosure;

FIG. 9 is a schematic diagram of still another optional viewing angle adjustment method according to an embodiment of the present disclosure;

FIG. 10 is a schematic diagram of still another optional viewing angle adjustment method according to an embodiment of the present disclosure;

FIG. 11 is a schematic diagram of still another optional viewing angle adjustment method according to an embodiment of the present disclosure;

FIG. 12 is a schematic diagram of still another optional viewing angle adjustment method according to an embodiment of the present disclosure;

FIG. 13 is a schematic diagram of an optional viewing angle adjustment device according to an embodiment of the present disclosure; and

FIG. 14 is a schematic diagram of an optional electronic device according to an embodiment of the present disclosure.

## DESCRIPTION OF EMBODIMENTS

To make a person skilled in the art better understand solutions of the present disclosure, the following clearly and completely describes the technical solutions in embodiments of the present disclosure with reference to the accompanying drawings in the embodiments of the present disclosure. Apparently, the described embodiments are merely some rather than all of the embodiments of the present disclosure. All other embodiments obtained by a person skilled in the art based on the embodiments of the present disclosure without creative efforts shall fall within the protection scope of the present disclosure.

In the specification, claims, and accompanying drawings of the present disclosure, the terms "first", "second", and so on are intended to distinguish between similar objects rather than indicating a specific order. It is understood that the data termed in such a way are interchangeable in proper circumstances, so that the embodiments of the present disclosure described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, product, or device.

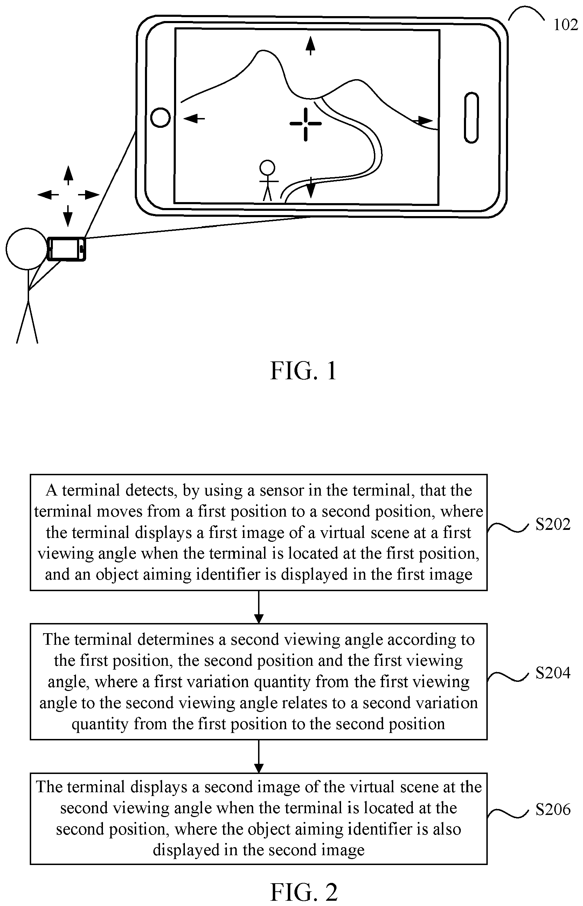

According to an aspect of the embodiments of the present disclosure, a viewing angle adjustment method is provided. Optionally, the method may be applied to, but not limited to, an application environment shown in FIG. 1. A terminal 102 detects, by using a sensor in the terminal 102, that the terminal moves from a first position to a second position, where the terminal 102 displays a first image of a virtual scene at a first viewing angle when the terminal 102 is located at the first position, and an object aiming identifier is displayed in the first image. The terminal 102 determines a second viewing angle according to the first position, the second position and the first viewing angle. The terminal 102 displays a second image of the virtual scene at the second viewing angle when the terminal 102 is located at the second position, where the object aiming identifier is also displayed in the second image.

According to the viewing angle adjustment method, after the sensor in the terminal detects a position variation of the terminal, the terminal determines a second viewing angle after the variation according to positions before and after the variation and the first viewing angle before the variation, and displays the second image according to the second viewing angle, thereby adjusting the viewing angle according to the varied position of the terminal, and further adjusting the displayed images. Also, there is no need to use both hands to perform the screen sliding operation to control and adjust the displayed viewing angle of the terminal, so that the operation of the viewing angle adjustment of the terminal is simplified, thereby solving the technical problem of relatively high operation complexity of viewing angle adjustment in the related art.

Optionally, in this embodiment, as an optional implementation, as shown in FIG. 2, the viewing angle adjustment method may include steps S202 to S206.

In step S202, a terminal detects, by using a sensor in the terminal, that the terminal moves from a first position to a second position, where the terminal displays a first image of a virtual scene at a first viewing angle when the terminal is located at the first position, and an object aiming identifier is displayed in the first image.

In step S204, the terminal determines a second viewing angle according to the first position, the second position and the first viewing angle, where a first variation quantity from the first viewing angle to the second viewing angle relates to a second variation quantity from the first position to the second position.

In step S206, the terminal displays a second image of the virtual scene at the second viewing angle when the terminal is located at the second position, where the object aiming identifier is also displayed in the second image.

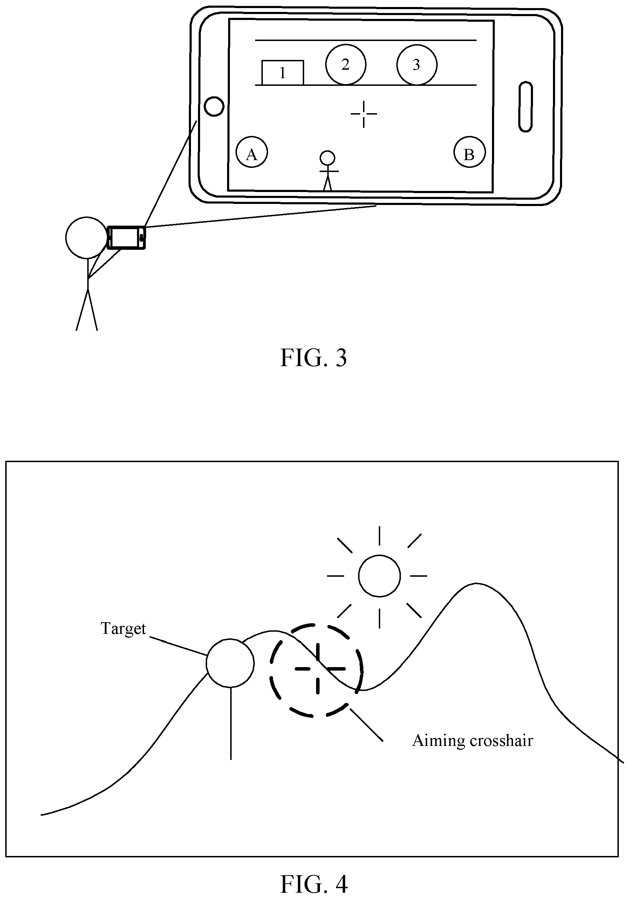

Optionally, in this embodiment, the viewing angle adjustment method may be applied to, but not limited to, an application scene in a mobile terminal that is used for determining a controlled target object. For example, the application scene may include, but not limited to, a scene in a game application for determining a target object of a game process interaction, and a scene in a shopping application for determining a target object selected in a shopping process. For example, when the viewing angle adjustment method is applied to the game application, a game viewing angle in the game application may be adjusted by adjusting a position variation of the terminal, and then an image displayed in a game scene is changed through a variation of the game viewing angle, so as to determine the target object of the game interaction. Alternatively, when being applied to the shopping application, the method may adjust, but is not limited to, an image displayed at a shopping viewing angle by adjusting the position variation of the terminal, so as to determine the target object to be purchased. For example, as shown in FIG. 3, multiple commodities are shown in a virtual shopping scene. FIG. 3 shows a commodity 1, a commodity 2, and a commodity 3. Assuming that the terminal currently displays the first image at the first viewing angle, when it is detected that the terminal moves from the first position to the second position, the second viewing angle may be determined through the first position, the second position and the first viewing angle, and a second image of the virtual shopping scene may be displayed according to the second viewing angle, thereby achieving an objective of directly adjusting an image at a viewing angle displayed in the terminal by controlling the position variation of the terminal, to simplify the viewing angle adjustment operation.

Optionally, in this embodiment, the position variation of the terminal detected by the sensor in the terminal may be a variation of a horizontal position, a variation of a vertical position, or a combination of variations of the horizontal position and the vertical position.

Optionally, in this embodiment, after the terminal displays the second image of the virtual scene at the second viewing angle when the terminal is located at the second position, the method further includes: acquiring, by the terminal, an operation instruction for performing an operation on an aimed object in the virtual scene in a case that a display position of the object aiming identifier in the second image coincides with a display position of the aimed object.

Using a shooting game application as an example, the object aiming identifier may be an aiming crosshair, the aimed object may be a target, and the operation instruction may be a shooting instruction. FIG. 4 shows the aimed object (the target shown in a solid circle) and the object aiming identifier (the aiming crosshair represented by a cross of line segments in a dotted circle). When the sensor in the terminal detects the position variation of the terminal, the viewing angle displayed in the terminal may vary accordingly. With reference to FIG. 4, in an image of the virtual scene displayed at the varied viewing angle, a relative position of the target to the aiming crosshair located at a fixed position at the viewing angle may vary accordingly. When the varied aiming crosshair coincides with the target, the shooting instruction is acquired, to perform a shooting operation on the target.

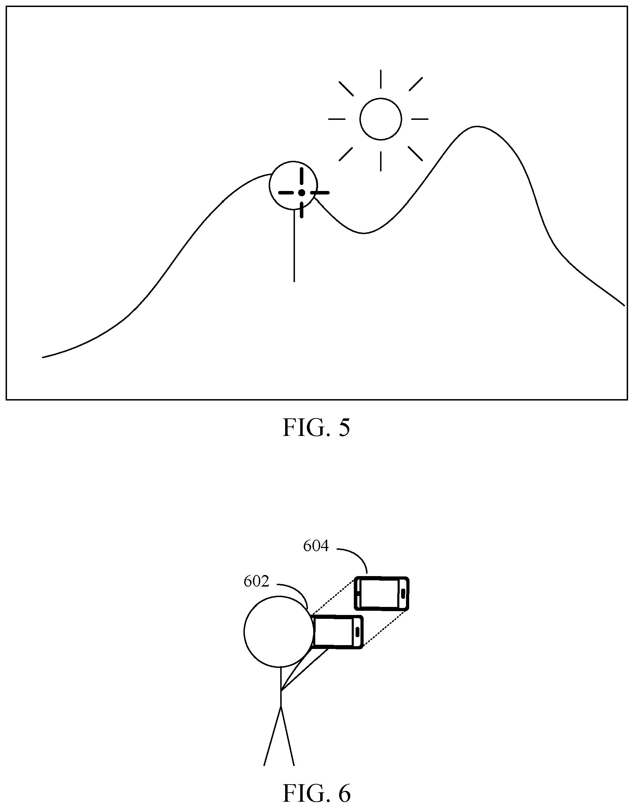

Optionally, in this embodiment, after the terminal displays the second image of the virtual scene at the second viewing angle when the terminal is located at the second position, the method further includes: changing, by the terminal, a pattern of the aiming identifier in a case that a display position of the object aiming identifier in the second image coincides with a display position of the aimed object in the virtual scene, as shown in FIG. 4, for example. FIG. 4 shows an aimed object and an aiming identifier composed of four line segments, where the aiming identifier does not coincide with the aimed object. As shown in FIG. 5, the aiming identifier coincides with the aimed object in FIG. 5. Therefore, the terminal changes the pattern of the aiming identifier, that is, the aiming identifier composed of four line segments is changed into an aiming identifier composed of four line segments and an origin.

Optionally, in this embodiment, the change of the pattern of the aiming identifier made by the terminal may be, but not limited to, a change on a color, a shape, or a size of the aiming identifier, which is not specifically limited in this embodiment.

Optionally, before the sensor in the terminal detects that the terminal moves from the first position to the second position, the method further includes: receiving, by the terminal, a locking instruction, where the locking instruction is used for locking a viewing angle displayed by the terminal at a current position. For example, the terminal locks the viewing angle displayed by the terminal at the current position when receiving the locking instruction. In this case, after the position of the terminal is varied, the viewing angle displayed by the terminal at the current position is not varied. Taking the viewing angle adjustment method being applied to a game application as an example, when a user plays the game by using a handheld terminal, a current pose or position may be varied due to a long time of playing or other reasons. However, the user does not want the current position variation of the terminal to affect the viewing angle in the game application. Therefore, when the terminal receives the locking instruction, it indicates that the user is performing a movement irrelevant to the game application. In this case, the sensor in the terminal does not detect the position variation of the terminal. When receiving an instruction of canceling the locking, the sensor in the terminal continues to detect the position variation of the terminal from the time when the locking instruction is canceled.

Optionally, in this embodiment, the process of determining by the terminal a second viewing angle according to the first position, the second position and the first viewing angle may include: acquiring, by the terminal, a first variation quantity from the first position to the second position; acquiring, by the terminal, a second variation quantity according to the first variation quantity; and controlling, by the terminal, a viewing angle to be varied from the first viewing angle to the second viewing angle according to the second variation quantity.

It is noted that, in this embodiment, the first variation quantity may include, but not limited to, a variation direction, a variation speed, and a variation distance of the position of the terminal.

In a case that the first variation quantity includes the variation direction, the process of determining, by the terminal, a second viewing angle according to the first position, the second position and the first viewing angle may further include: determining, by the terminal, a movement direction of the second viewing angle relative to the first viewing angle according to a movement direction of the second position relative to the first position.

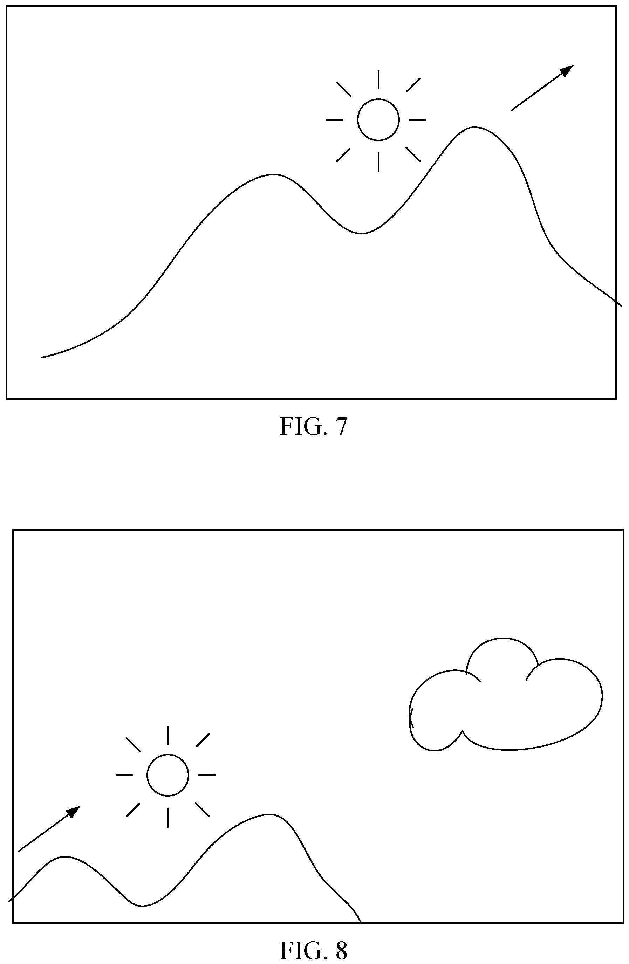

For example, as shown in FIG. 6, a position 602 is the first position of the terminal, and a position 604 is the second position of the terminal. Assuming that the terminal moves from the position 602 to the position 604, where the position 604 is located at an upper right direction relative to the position 602. FIG. 7 shows a first image at a first viewing angle displayed by the terminal at the position 602, and FIG. 8 shows a second image at a second viewing angle displayed by the terminal at the position 604. That is, after the terminal moves in the upper right direction, the viewing angle displayed by the terminal is adjusted from the first viewing angle to the second viewing angle. Accordingly, an image displayed in a virtual scene is adjusted from the first image shown in FIG. 7 to the second image shown in FIG. 8.

In addition, in a case that the first variation quantity includes the variation speed, the process of determining, by the terminal, a second viewing angle according to the first position, the second position and the first viewing angle may further include: determining, by the terminal, a variation speed from the first viewing angle to the second viewing angle according to a variation speed of the terminal from the first position to the second position.

For example, when the sensor in the terminal detects that the terminal moves from the first position to the second position, the terminal acquires the variation speed of the terminal from the first position to the second position, and controls the view angle of the terminal to be varied from the first viewing angle to the second viewing angle according to the acquired variation speed. A high variation speed of the terminal from the first position to the second position leads to a high speed of the terminal varying from the first viewing angle to the second viewing angle, and a low variation speed of the terminal from the first position to the second position leads to a low speed of the terminal varying from the first viewing angle to the second viewing angle.

In this embodiment of the present disclosure, the sensor in the terminal detects that the terminal moves from the first position to the second position, where the terminal displays the first image of the virtual scene at the first viewing angle when the terminal is located at the first position. The terminal determines the second viewing angle according to the first position, the second position and the first viewing angle, and displays the second image of the virtual scene according to the determined second viewing angle. Therefore, the image of the virtual scene displayed at the viewing angle can be adjusted according to the position variation of the terminal, so that there is no need to use both hands to perform the screen sliding operation to control the display viewing angle of the terminal, thereby simplifying the viewing angle adjustment operation of the terminal. Therefore, the technical problem of relatively high operation complexity of viewing angle adjustment in the related art is solved.

As an optional implementation, after the terminal displays the second image of the virtual scene at the second viewing angle when the terminal is located at the second position, the method further includes step S1.

In step S1, the terminal acquires an operation instruction for performing an operation on an aimed object in the virtual scene in a case that a display position of the object aiming identifier in the second image coincides with a display position of the aimed object.

Optionally, the operation instruction may be, but not limited to, an interaction operation with the aimed object, including: moving the aimed object, attacking the aimed object, viewing an attribute of the aimed object, changing a state of the aimed object, communicating with the aimed object, entering the aimed object, and the like, which are merely examples, rather than limitations to this embodiment.

Optionally, the acquiring an operation instruction for performing an operation on an aimed object may include, but not limited to, acquiring the operation instruction in a voice input manner, and acquiring the operation instruction in a screen touch manner.

Using a shooting game application as an example, the aimed object may be a target, and the aiming identifier may be an aiming crosshair. When the aiming crosshair coincides with the aimed object in the game screen, an attack operation may be performed on the target by pressing a button A or a button B at the right side of the game screen. Alternatively, when the aiming crosshair coincides with the aimed object in the game screen, an attack operation may be performed on the target by acquiring voice input information. For example, if the voice input information is "attack", the attack operation may be performed according to the voice input information.

In this embodiment, the manner of performing the attack operation through the button or the manner of performing the attack operation by acquiring the voice input information both are optional examples of the attack operation. This embodiment does not specifically limit the manner of performing the attack operation.

It is noted that in the game application, the aimed object may be an enemy object, or a teammate. When the aiming identifier coincides with the teammate, an interaction with the teammate may be performed by pressing the button A or the button B at the right side, for example, instant communications information may be exchanged. For another example, in the shopping application, the aimed object may be a virtual product, and the aiming identifier may be a selection box. When the selection box coincides with the virtual product, the virtual product may be selected or purchased by pressing the button A or the button B at the right side.

In this embodiment, the aimed object may be any object to be interacted with in the virtual scene. The foregoing is merely an optional example, and this embodiment does not specifically limit the aimed object.

In this embodiment of the present disclosure, in a case that the display position of the object aiming identifier in the second image coincides with the display position of the aimed object in the virtual scene, the terminal acquires the operation instruction for performing an operation on the aimed object, and then performs the operation on the aimed object according to the acquired operation instruction, thereby simplifying steps for performing the operation on the aimed object during the viewing angle adjustment process, without repeated manual adjustment. Therefore, this embodiment improves the operation efficiency of performing an operation on the aimed object during the viewing angle adjustment process.

As an optional implementation, while detecting by the terminal by using the sensor in the terminal that the terminal moves from the first position to the second position, the method further includes the following steps S1 and S2.

In step S1, the terminal acquires a control instruction generated by performing a control operation on a control region on the terminal, where the control instruction is used for controlling a target object in the virtual scene to perform an action.

In step S2, the terminal controls, in response to the control instruction, the target object to perform at least one of the following actions: a movement action, and an action on the displayed aimed object.

Using a racing game application as an example, the target object may be a game character object, and the control instruction may be a movement instruction. After a movement instruction of "running forward" is acquired through the touch screen, in response to the movement instruction of "running forward", the terminal may control the game character object to run forward.

Optionally, the target object may be any object controlled in the terminal application, for example, including a virtual character or a virtual item. The control instruction may be used for, but not limited to, controlling the target object to move, attack, select, switch equipment, rescue, pick up, discard, or the like. For example, if the target object is a virtual character, and the control instruction is "moving forward", the virtual character is controlled to move forward. The virtual character may be a person, an animal, or the like, which is not limited specifically herein.

In this embodiment of the present disclosure, while detecting by using the sensor in the terminal that the terminal moves from a first position to a second position, the terminal acquires the control instruction generated by performing the control operation on the control region on the terminal, and then the terminal controls, in response to the control instruction, the target object to perform the action, thereby controlling the target object to perform various actions during the viewing angle adjustment process. Therefore, steps of controlling the target object to perform the action during the viewing angle adjustment process is simplified, and the control efficiency of the target object is improved.

As an optional implementation, that the terminal determines a second viewing angle according to the first position, the second position and the first viewing angle includes the following steps S1 to S3.

In step S1, the terminal acquires a first variation quantity from the first position to the second position.

In step S2, the terminal acquires a second variation quantity according to the first variation quantity.

In stepS3, the terminal controls a viewing angle to be varied from the first viewing angle to the second viewing angle according to the second variation quantity.

Optionally, the first variation quantity includes, but not limited to, a variation direction, a variation speed, a variation distance, and the like.

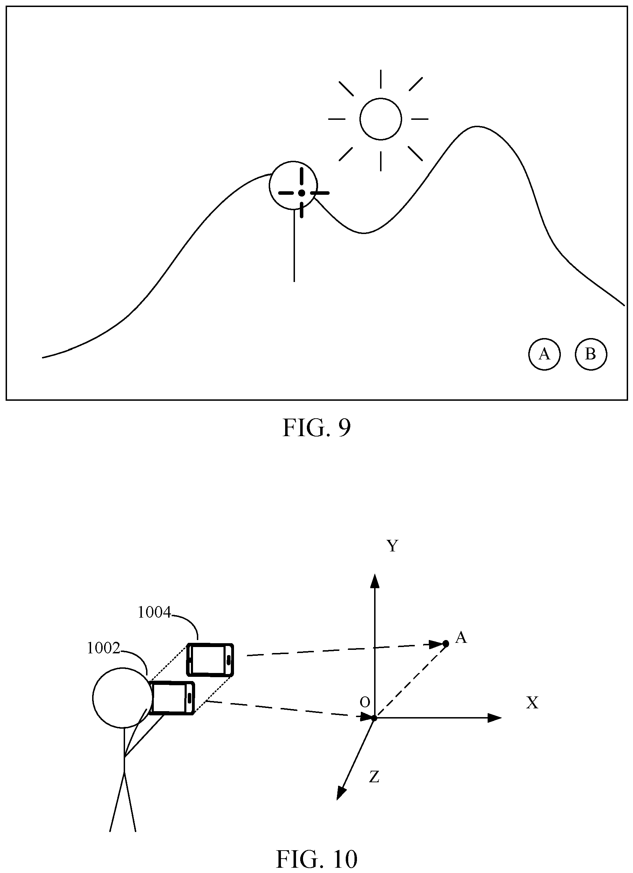

For example, as shown in FIG. 10, a three-dimensional coordinate system is established with an initial position of the terminal as an origin, where a plane at which a terminal plane is located includes an X-axis and a Y-axis of the three-dimensional coordinate system, and a direction perpendicular to the terminal plane and pointing to the outside of the screen is a Z-axis of the three-dimensional coordinate system. After the terminal moves from a first position 1002 to a second position 1004, correspondingly, the position moves from an origin O to a point A in the three-dimensional coordinate system. The terminal acquires the variation direction, the variation speed, and the variation distance of the terminal variation, acquires a variation direction, a variation speed, and a variation distance from the first viewing angle to the second viewing angle according to the acquired variation direction, variation speed, and variation distance, and controls, according to the variation direction, the variation speed, and the variation distance from the first viewing angle to the second viewing angle, the terminal to be varied from the first viewing angle to the second viewing angle.

In this embodiment of the present disclosure, the terminal acquires the second variation quantity according to the first variation quantity of the terminal from the first position to the second position, and controls, according to the second variation quantity, the terminal to be varied from the first viewing angle to the second viewing angle. Therefore, the view angles of displayed images in the virtual scene are adjusted according to the position variation of the terminal.

As an optional implementation, the acquiring the second variation quantity according to the first variation quantity of the terminal includes the following steps S1 and S2.

In step S1, the terminal acquires a viewing angle adjustment sensitivity.

In stepS2, the terminal determines the second variation quantity according to the first variation quantity and the viewing angle adjustment sensitivity.

Optionally, an implementation may be, but not limited to, receiving the sensitivity and setting the viewing angle adjustment sensitivity according to the received sensitivity. Optionally, the sensitivity may be inputted by a user or automatically generated by a system, which is not limited in this embodiment.

For example, assuming that the received sensitivity is a vector a, and the first variation quantity is a vector b, the second variation quantity may be acquired by multiplying the vector a by the vector b.

Optionally, the above manner of acquiring the second variation quantity by multiplying the first variation quantity by the sensitivity is merely an example, and the specific calculation method is not limited in this embodiment herein.

In this embodiment of the present disclosure, the terminal acquires the viewing angle adjustment sensitivity and determines the second variation quantity according to the viewing angle adjustment sensitivity and the first variation quantity. Therefore, in the viewing angle adjustment process, the viewing angle is adjusted according to the viewing angle adjustment sensitivity, thereby improving a flexible degree of the viewing angle adjustment. Therefore, the viewing angle of the terminal can be adjusted flexibly.

As an optional implementation, that the terminal acquires a viewing angle adjustment sensitivity includes the following steps S1 to S3.

In step S1, the terminal detects a press instruction generated by performing a press operation on a region on the terminal.

In step S2, the terminal determines the viewing angle adjustment sensitivity as a first sensitivity in a case that the press instruction is detected.

In step S3, the terminal determines the viewing angle adjustment sensitivity as a second sensitivity in a case that the press instruction is not detected.

The first sensitivity is less than the second sensitivity.

Optionally, the region on which the press operation is performed may be a non-control region. The non-control region may be, but not limited to, a region indicated out of the control button.

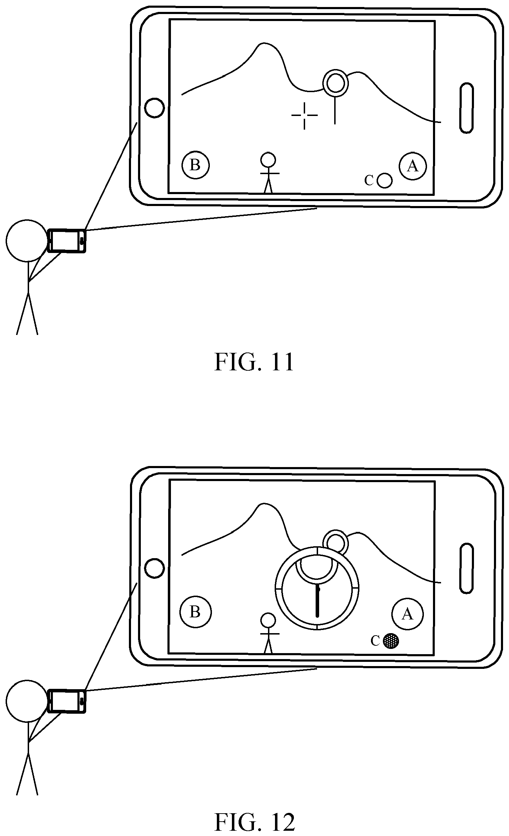

Using the game application as an example, FIG. 11 shows an optional game scene. The object aiming identifier is located at a center position of the screen. The button A shown in FIG. 11 is a control region. A character in the game is controlled to shoot when the control region is detected to be pressed. When a press instruction is detected on a region out of the button A on the terminal, the terminal sets the viewing angle adjustment sensitivity as the first sensitivity. If no press instruction is detected on the region out of the button A on the terminal, the terminal determines the viewing angle adjustment sensitivity as the second sensitivity. The first sensitivity is less than the second sensitivity.

In this embodiment of the present disclosure, the terminal determines whether the press instruction generated by performing the press operation on the region on the terminal is detected, to determine the viewing angle adjustment sensitivity, and determines the second variation quantity according to the viewing angle adjustment sensitivity. Therefore, in the viewing angle adjustment process, the viewing angle is adjusted according to different adjustment sensitivities, thereby improving the method of adjusting the viewing angle, and thus enhancing the accuracy of adjusting the viewing angle.

As an optional implementation, that the terminal acquires a viewing angle adjustment sensitivity includes the following steps S1 to S3.

In step S1, the terminal acquires a display mode of the terminal.

In step S2, the terminal determines the viewing angle adjustment sensitivity as a third sensitivity in a case that the display mode is a panorama mode.

In step S3, the terminal determines the viewing angle adjustment sensitivity as a fourth sensitivity in a case that the display mode is a partial mode.

The third sensitivity is different from the fourth sensitivity.

Using a shooting game application as an example, FIG. 12 shows an optional shooting game scene. As shown in FIG. 12, a button B at the left side is used for controlling the game character to move, and the button A at the right side is used for controlling the game character to attack. A button C under the button A at the right side is used for switching the display mode of the terminal. After the button C is pressed, the display mode of the terminal is switched from the panorama mode to the partial mode. In this case, a color of the button C is changed, which is shown as a shadow in FIG. 12. After the button C is pressed again, the partial mode of the terminal is canceled, and the object aiming identifier shown in FIG. 11 is recovered. The color of the button C is recovered to a color for the panorama mode. The partial mode obtained by pressing the button C and the panorama mode obtained by canceling the partial mode correspond to different viewing angle adjustment sensitivities.

The panorama mode may be, but not limited to, normal aiming in the shooting game, and the partial mode may be, but not limited to, scope aiming in the shooting game. In the partial mode, a part of the aimed object coincides with the aiming identifier will be amplified for display. This is merely an example, which is not limited in this embodiment.

In this embodiment of the present disclosure, the terminal sets the viewing angle adjustment sensitivity differently according to different display modes of the terminal, determines the second variation quantity according to the differently set viewing angle adjustment sensitivities, and adjusts the viewing angle of the terminal based on the second variation quantity. Therefore, in the viewing angle adjustment process, the viewing angle is adjusted according to different adjustment sensitivities, thereby improving the method of adjusting the viewing angle, and thus enhancing the accuracy of adjusting the viewing angle.

As an optional implementation, that the terminal controls a viewing angle to be varied from the first viewing angle to the second viewing angle according to the second variation quantity includes the following steps S1 and S2.

In step S1, the terminal acquires a product of the first variation quantity and the viewing angle adjustment sensitivity.

In step S2, the terminal controls the viewing angle to be varied from the first viewing angle to the second viewing angle according to the second variation quantity in a case that a magnitude of the product is greater than a preset threshold.

For example, a distance variation quantity $\alpha$ in the first variation quantity is acquired, and $\lambda$ is the viewing angle adjustment sensitivity. As shown in FIG. 9, after acquiring the distance variation quantity $\alpha$ in the first variation quantity, the terminal projects the distance variation quantity $\alpha$ in the first variation quantity on the X-axis and the Y-axis. A vector projection acquired by the terminal is OA. If a product of the OA and $\lambda$ is greater than the preset threshold, an interface displayed on a client is adjusted according to the method in the foregoing embodiments. The product of the OA and $\lambda$ may be acquired through the following formula:

$$\left|\lambda\alpha\right| = \lambda\sqrt{x^2 + y^2} \qquad (1)$$

In this embodiment of the present disclosure, it is determined whether a product of a terminal movement vector and a movement sensitivity is greater than the preset threshold, so as to determine whether the position variation of the terminal is caused by a tiny jitter. Therefore, the impact of the tiny jitter of the terminal on the viewing angle of the terminal is avoided, so that the adjustment accuracy of the viewing angle of the terminal is improved.

It is noted that, for briefness, the foregoing method embodiments are stated as a series of action combinations. However, it is understood by a person skilled in the art that the present disclosure is not limited to the sequence of the described actions, because according to the present disclosure, some steps may be performed in another sequence or may be performed at the same time. In addition, it is understood by a person skilled in the art that the embodiments described in the specification are all optional embodiments, and the related actions and modules may not be necessary for the technical solutions in the present disclosure.

According to the descriptions in the foregoing implementations, a person skilled in the art may clearly learn that the method according to the foregoing embodiments may be implemented by software on a necessary common hardware platform or by hardware, but in many cases the former is a better implementation. Based on such an understanding, the essence of the technical solutions in the present disclosure or the part contributing to the related art may be implemented in the form of a software product. The computer software product is stored in a storage medium (such as a ROM/RAM, a magnetic disk, or an optical disc), and includes several instructions for instructing a terminal device (which may be a mobile phone, a computer, a server, a network device, and the like) to perform the method described in the embodiments of the present disclosure.

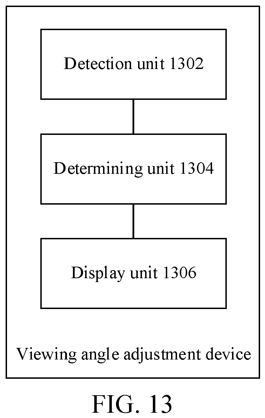

According to another aspect of the embodiments of the present disclosure, a viewing angle adjustment device for implementing the foregoing viewing angle adjustment method is further provided. The foregoing device may be applied to, but not limited to, a terminal. As an optional example, as shown in FIG. 13, the device includes:

(1) a detection unit 1302, configured to detect, by using a sensor on a terminal, that the terminal moves from a first position to a second position, where the terminal displays a first image of a virtual scene at a first viewing angle when the terminal is located at the first position, and an object aiming identifier is displayed in the first image;

(2) a determining unit 1304, configured to determine a second viewing angle according to the first position, the second position and the first viewing angle, where a first variation quantity from the first viewing angle to the second viewing angle relates to a second variation quantity from the first position to the second position; and

(3) a display unit 1306, configured display a second image of the virtual scene at the second viewing angle when the terminal is located at the second position, where the object aiming identifier is also displayed in the second image.

Optionally, in this embodiment, the viewing angle adjustment method may be applied to, but not limited to, an application scene in a mobile terminal that is used for determining a controlled target object. For example, the application scene may include, but not limited to, a scene in a game application for determining a target object of a game process interaction, and a scene in a shopping application for determining a target object selected in a shopping process. For example, when the viewing angle adjustment method is applied to the game application, a game viewing angle in the game application may be adjusted by adjusting a position variation of the terminal, and then an image displayed in a game scene is changed through a variation of the game viewing angle, so as to determine the target object of the game interaction. Alternatively, when being applied to the shopping application, the method may adjust, but is not limited to, an image displayed at a shopping viewing angle by adjusting the position variation of the terminal, so as to determine the target object to be purchased. For example, as shown in FIG. 3, multiple commodities are shown in a virtual shopping scene. FIG. 3 shows a commodity 1, a commodity 2, and a commodity 3. Assuming that the terminal currently displays the first image at the first viewing angle, when it is detected that the terminal moves from the first position to the second position, the second viewing angle may be determined through the first position, the second position and the first viewing angle, and a second image of the virtual shopping scene may be displayed according to the second viewing angle, thereby achieving an objective of directly adjusting an image at a viewing angle displayed in the terminal by controlling the position variation of the terminal, to simplify the viewing angle adjustment operation.

Optionally, in this embodiment, the position variation of the terminal detected by the sensor may be a variation of a horizontal position, a variation of a vertical position, or a combination of variations of the horizontal position and the vertical position.

Optionally, in this embodiment, after the terminal displays the second image of the virtual scene at the second viewing angle when the terminal is located at the second position, the device is further configured to acquire an operation instruction for performing an operation on an aimed object in the virtual scene in a case that a display position of the object aiming identifier in the second image coincides with a display position of the aimed object.

Using a shooting game application as an example, the object aiming identifier may be an aiming crosshair, the aimed object may be a target, and the operation instruction may be a shooting instruction. FIG. 4 shows the aimed object (the target shown in a solid circle) and the object aiming identifier (the aiming crosshair represented by a cross of line segments in a dotted circle). When the sensor detects the position variation of the terminal, the viewing angle displayed in the terminal may vary accordingly. With reference to FIG. 4, in an image of the virtual scene displayed at the varied viewing angle, a relative position of the target to the aiming crosshair located at a fixed position at the viewing angle may vary accordingly. When the varied aiming crosshair coincides with the target, a shooting instruction is acquired, to perform a shooting operation on the target.

Optionally, in this embodiment, after the terminal displays the second image of the virtual scene at the second viewing angle when the terminal is located at the second position, the device is further configured to change a pattern of the aiming identifier in a case that a display position of the object aiming identifier in the second image coincides with a display position of the aimed object in the virtual scene, as shown in FIG. 4, for example. FIG. 4 shows an aimed object and an aiming identifier composed of four line segments, where the aiming identifier does not coincide with the aimed object. As shown in FIG. 5, the aiming identifier coincides with the aimed object in FIG. 5. Therefore, the pattern of the aiming identifier is changed, that is, the aiming identifier composed of four line segments is changed into an aiming identifier composed of four line segments and an origin.

Optionally, in this embodiment, the change of the pattern of the aiming identifier may be, but is not limited to, a change on a color, a shape, or a size of the aiming identifier, which is not specifically limited in this embodiment.

Optionally, before the sensor in the terminal detects that the terminal moves from the first position to the second position, the device is further configured to receive a locking instruction, where the locking instruction is used for locking a viewing angle displayed by the terminal at a current position. For example, the viewing angle displayed by the terminal at the current position is locked when the locking instruction is received. In this case, after the position of the terminal is varied, the viewing angle displayed by the terminal at the current position is not varied. Taking the viewing angle adjustment method being applied to a game application as an example, when a user plays the game by using a handheld terminal, a current pose or position needs to be varied due to a long time of playing or other reasons. However, the user does not want the current position variation of the terminal to affect the viewing angle in the game application. Therefore, when the terminal receives the locking instruction, it indicates that the user is performing a movement irrelevant to the game application. In this case, the sensor in the terminal does not detect the position variation of the terminal. When receiving an instruction of canceling the locking, the sensor in the terminal continues to detect the position variation of the terminal from the time when the locking instruction is canceled.

Optionally, in this embodiment, the determining a second viewing angle according to the first position, the second position and the first viewing angle may include: acquiring a first variation quantity from the first position to the second position; acquiring a second variation quantity according to the first variation quantity; and controlling a viewing angle to be varied from the first viewing angle to the second viewing angle according to the second variation quantity.

It is noted that, in this embodiment, the first variation quantity may include, but not limited to, a variation direction, a variation speed, and a variation distance of the position of the terminal.

In a case that the first variation quantity includes the variation direction, the process of determining a second viewing angle according to the first position, the second position and the first viewing angle may further include: determining a movement direction of the second viewing angle relative to the first viewing angle according to a movement direction of the second position relative to the first position.

For example, as shown in FIG. 6, a position 602 is the first position of the terminal, and a position 604 is the second position of the terminal. Assuming that the terminal moves from the position 602 to the position 604, where the position 604 is located at an upper right direction relative to the position 602. FIG. 7 shows a first image at a first viewing angle displayed by the terminal at the position 602, and FIG. 8 shows a second image at a second viewing angle displayed by the terminal at the position 604. That is, after the terminal moves in the upper right direction, the viewing angle displayed by the terminal is adjusted from the first viewing angle to the second viewing angle. Accordingly, an image displayed in a virtual scene is adjusted from the first image shown in FIG. 7 to the second image shown in FIG. 8.

In addition, in a case that the first variation quantity includes the variation speed, the process of determining a second viewing angle according to the first position, the second position and the first viewing angle may further include: determining a variation speed from the first viewing angle to the second viewing angle according to a variation speed of the terminal from the first position to the second position.

For example, when the sensor in the terminal detects that the terminal moves from the first position to the second position, the variation speed of the terminal from the first position to the second position is acquired, and the view angle of the terminal is controlled to be varied from the first viewing angle to the second viewing angle according to the acquired variation speed. A high variation speed of the terminal from the first position to the second position leads to a high speed of the terminal varying from the first viewing angle to the second viewing angle, and a low variation speed of the terminal from the first position to the second position leads to a low speed of the terminal varying from the first viewing angle to the second viewing angle.

In this embodiment of the present disclosure, the sensor in the terminal detects that the terminal moves from the first position to the second position, where the terminal displays the first image of the virtual scene at the first viewing angle when the terminal is located at the first position. The terminal determines the second viewing angle according to the first position, the second position and the first viewing angle, and displays the second image of the virtual scene according to the determined second viewing angle. Therefore, the image of the virtual scene displayed at the displayed viewing angle can be adjusted according to the position variation of the terminal, so that there is no need to use both hands to perform the screen sliding operation to control the displayed viewing angle of the terminal, thereby simplifying the viewing angle adjustment operation of the terminal. Therefore, the technical problem of relatively high operation complexity of viewing angle adjustment in the related art is solved.

As an optional solution, the device further includes:

(1) an acquisition unit, configured to: after the second image of the virtual scene is displayed at the second viewing angle when the terminal is located at the second position, acquire an operation instruction for performing an operation on an aimed object in the virtual scene in a case that a display position of the object aiming identifier in the second image coincides with a display position of the aimed object.

Optionally, the operation instruction may be, but not limited to, an interaction operation with the aimed object, including: moving the aimed object, attacking the aimed object, viewing an attribute of the aimed object, changing a state of the aimed object, communicating with the aimed object, entering the aimed object, and the like, which are merely examples, rather than limitations to this embodiment.

Optionally, the acquiring an operation instruction for performing an operation on an aimed object may include, but not limited to, acquiring the operation instruction in a voice input manner, and acquiring the operation instruction in a screen touch manner.

Using a shooting game application as an example, the aimed object may be a target, and the aiming identifier may be an aiming crosshair. When the aiming crosshair coincides with the aimed object in the game screen, an attack operation may be performed on the target by pressing a button A or a button B at the right side of the game screen. Alternatively, when the aiming crosshair coincides with the aimed object in the game screen, an attack operation may be performed on the target by acquiring voice input information. For example, if the voice input information is "attack", the attack operation may be performed according to the voice input information.

In this embodiment, the manner of performing the attack operation through the button or the manner of performing the attack operation by acquiring the voice input information both are optional examples of the attack operation. This embodiment does not specifically limit the manner of performing the attack operation.

It is noted that, in the game application, the aimed object may be an enemy object, or a teammate. When the aiming identifier coincides with the teammate, an interaction with the teammate may be performed by pressing the button A or the button B at the right side, for example, instant communications information may be exchanged. For another example, in the shopping application, the aimed object may be a virtual product, and the aiming identifier may be a selection box. When the selection box coincides with the virtual product, the virtual product may be selected or purchased by pressing the button A or the button B at the right side.

In this embodiment, the aimed object may be any object to be interacted with in the virtual scene. The foregoing is merely an optional example, and this embodiment does not specifically limit the aimed object.

In this embodiment of the present disclosure, in a case that the display position of the object aiming identifier in the second image coincides with the display position of the aimed object in the virtual scene, the operation instruction for performing an operation on the aimed object is acquired, and then the operation may be performed on the aimed object according to the acquired operation instruction, thereby simplifying steps for performing the operation on the aimed object during the viewing angle adjustment process, without repeated manual adjustment. Therefore, this embodiment improves the operation efficiency of performing an operation on the aimed object during the viewing angle adjustment process.

As an optional solution, the detection unit 1302 includes:

(1) a first acquisition module, configured to acquire a control instruction generated by performing a control operation on a control region on the terminal, where the control instruction is used for controlling a target object in the virtual scene to perform an action; and

(2) a first control module, configured to control, in response to the control instruction, the target object to perform at least one of the following actions: a movement action, and an action on the displayed aimed object.

Using a racing game application as an example, the target object may be a game character object, and the control instruction may be a movement instruction. After a movement instruction of "running forward" is acquired through the touch screen, in response to the movement instruction of "running forward", the game character object may be controlled to run forward.

Optionally, the target object may be any object controlled in the terminal application, for example, including a virtual character or a virtual item. The control instruction may be used for, but not limited to, controlling the target object to move, attack, select, switch equipment, rescue, pick up, discard, or the like. For example, if the target object is a virtual character, and the control instruction is "moving forward", the virtual character is controlled to move forward. The virtual character may be a person, an animal, or the like, which is not limited specifically herein.

In this embodiment of the present disclosure, while detecting by using the sensor in the terminal that the terminal moves from a first position to a second position, the control instruction generated by performing the control operation on the control region on the terminal is acquired, and then the target object is controlled, in response to the control instruction, to perform the action, thereby controlling the target object to perform various actions during the viewing angle adjustment process. Therefore, steps of controlling the target object to perform the action during the viewing angle adjustment process is simplified, and the control efficiency of the target object is improved.

As an optional solution, the determining unit 1304 includes:

(1) a second acquisition module, configured to acquire a first variation quantity from the first position to the second position;

(2) a third acquisition module, configured to acquire a second variation quantity according to the first variation quantity; and

(3) a second control module, configured to control a viewing angle to be varied from the first viewing angle to the second viewing angle according to the second variation quantity.

Optionally, the first variation quantity includes, but not limited to, a variation direction, a variation speed, a variation distance, and the like.

For example, as shown in FIG. 10, a three-dimensional coordinate system is established with an initial position of the terminal as an origin, where a plane at which a terminal plane is located includes an X-axis and a Y-axis of the three-dimensional coordinate system, and a direction perpendicular to the terminal plane and pointing to the outside of the screen is a Z-axis of the three-dimensional coordinate system. After the terminal moves from a first position 1002 to a second position 1004, correspondingly, the position moves from an origin O to a point A in the three-dimensional coordinate system. The terminal acquires the variation direction, the variation speed, and the variation distance of the terminal variation, acquires a variation direction, a variation speed, and a variation distance from the first viewing angle to the second viewing angle according to the acquired variation direction, variation speed, and variation distance, and controls, according to the variation direction, the variation speed, and the variation distance from the first viewing angle to the second viewing angle, the terminal to be varied from the first viewing angle to the second viewing angle.

In this embodiment of the present disclosure, the second variation quantity is acquired according to the first variation quantity of the terminal from the first position to the second position, and the terminal is controlled to be varied from the first viewing angle to the second viewing angle according to the second variation quantity. Therefore, the view angles of displayed images in the virtual scene are adjusted according to the position variation of the terminal is achieved.

As an optional solution, the third acquisition module includes:

(1) a first acquisition submodule, configured to acquire a viewing angle adjustment sensitivity; and

(2) a first determining submodule, configured to determine the second variation quantity according to the first variation quantity and the viewing angle adjustment sensitivity.

Optionally, an implementation may be, but not limited to receiving the sensitivity and setting the viewing angle adjustment sensitivity according to the received sensitivity. Optionally, the sensitivity may be inputted by a user or automatically generated by a system, which is not limited in this embodiment.

For example, assuming that the received sensitivity is a vector a, and the first variation quantity is a vector b, the second variation quantity may be acquired by multiplying the vector a by the vector b.

Optionally, the above manner of acquiring the second variation quantity by multiplying the first variation quantity by the sensitivity is merely an example, and the specific calculation method is not limited in this embodiment herein.

In this embodiment of the present disclosure, the viewing angle adjustment sensitivity is acquired and the second variation quantity is determined according to the viewing angle adjustment sensitivity and the first variation quantity. Therefore, in the viewing angle adjustment process, the viewing angle is adjusted according to the viewing angle adjustment sensitivity, thereby improving a flexible degree of the viewing angle adjustment. Therefore, the viewing angle of the terminal can be adjusted flexibly.

As an optional solution, the first acquisition submodule acquires the viewing angle adjustment sensitivity by the following steps S1 to S3.

In step S1, a press instruction generated by performing a press operation on a region on the terminal is detected.

In step S2, the viewing angle adjustment sensitivity is determined as a first sensitivity in a case that the press instruction is detected.

In step S3, the viewing angle adjustment sensitivity is determined as a second sensitivity in a case that the press instruction is not detected.

The first sensitivity is less than the second sensitivity.

Optionally, the region on which the press operation is performed may be a non-control region. The non-control region may be, but not limited to, a region indicated out of the control button.

Using the game application as an example, FIG. 11 shows an optional game scene. The object aiming identifier is located at a center position of the screen. The button A shown in FIG. 11 is a control region. A character in the game is controlled to shoot when the control region is detected to be pressed. When a press instruction is detected on a region out of the button A on the terminal, the viewing angle adjustment sensitivity is set as the first sensitivity. If no press instruction is detected on the region out of the button A on the terminal, the viewing angle adjustment sensitivity is determined as the second sensitivity. The first sensitivity is less than the second sensitivity.

In this embodiment of the present disclosure, it is determined whether the press instruction generated by performing the press operation on the region on the terminal is detected, to determine the viewing angle adjustment sensitivity, and the second variation quantity is determined according to the viewing angle adjustment sensitivity. Therefore, in the viewing angle adjustment process, the viewing angle is adjusted according to different adjustment sensitivities, thereby improving the method of adjusting the viewing angle, and thus enhancing the accuracy of adjusting the viewing angle.

As an optional solution, the first acquisition submodule acquires the viewing angle adjustment sensitivity by the following steps S1 to S3.

In step S1, a display mode of the terminal is acquired.

In step S2, the viewing angle adjustment sensitivity is determined as a third sensitivity in a case that the display mode is a panorama mode.

In step S3, the viewing angle adjustment sensitivity is determined as a fourth sensitivity in a case that the display mode is a partial mode. The third sensitivity is different from the fourth sensitivity.

Using a shooting game application as an example, FIG. 12 shows an optional shooting game scene. As shown in FIG. 12, a button B at the left side is used for controlling the game character to move, and the button A at the right side is used for controlling the game character to attack. A button C under the button A at the right side is used for switching the display mode of the terminal. After the button C is pressed, the display mode of the terminal is switched from the panorama mode to the partial mode. In this case, a color of the button C is changed, which is shown as a shadow in FIG. 12. After the button C is pressed again, the partial mode of the terminal is canceled, and the object aiming identifier shown in FIG. 11 is recovered. The color of the button C is recovered to a color for the panorama mode. The partial mode obtained by pressing the button C and the panorama mode obtained by canceling the partial mode correspond to different viewing angle adjustment sensitivities.

The panorama mode may be, but not limited to, normal aiming in the shooting game, and the partial mode may be, but not limited to, scope aiming in the shooting game. In the partial mode, a part of the aimed object coincides with the aiming identifier will be amplified for display. This is merely an example, which is not limited in this embodiment.

In this embodiment of the present disclosure, the viewing angle adjustment sensitivity is set differently according to different display modes of the terminal, the second variation quantity is determined according to the differently set viewing angle adjustment sensitivity, and the viewing angle of the terminal is adjusted based on the second variation quantity. Therefore, in the viewing angle adjustment process, the viewing angle is adjusted according to different adjustment sensitivities, thereby improving the method of adjusting the viewing angle, and thus enhancing the accuracy of adjusting the viewing angle.

As an optional solution, the second control module includes:

(1) a third acquisition submodule, configured to acquire a product of the first variation quantity and the viewing angle adjustment sensitivity; and
(2) a control submodule, configured to control the viewing angle to be varied from the first viewing angle to the second viewing angle according to the second variation quantity in a case that a magnitude of the product is greater than a preset threshold.

For example, a distance variation quantity $\alpha$ in the first variation quantity is acquired, and $\lambda$ is the viewing angle adjustment sensitivity. As shown in FIG. 9, after the distance variation quantity $\alpha$ in the first variation quantity is acquired, the distance variation quantity $\alpha$ in the first variation quantity is projected on the X-axis and the Y-axis, to acquire a vector projection OA. If a product of the OA and $\lambda$ is greater than the preset threshold, an interface displayed on a client is adjusted according to the method in the foregoing embodiments. The product of the OA and $\lambda$ may be acquired through the following formula:

$$\left| \lambda\alpha \right| = \lambda\sqrt{x^2 + y^2} \qquad (2)$$

In this embodiment of the present disclosure, it is determined whether a product of a terminal movement vector and a movement sensitivity is greater than the preset threshold, to determine whether the position variation of the terminal is caused by a tiny jitter. Therefore, the impact of the tiny jitter of the terminal on the viewing angle of the terminal is avoided, so that the adjustment accuracy of the viewing angle of the terminal is improved.

According to still another aspect of the embodiments of the present disclosure, a storage medium is further provided. The storage medium may store execution instructions. The execution instructions are used for performing the viewing angle adjustment method in the foregoing embodiments.

Optionally, in this embodiment, the storage medium stores a computer program used to perform the following steps S1 to S3.

In step S1, a terminal detects, by using a sensor in the terminal, that the terminal moves from a first position to a second position, where the terminal displays a first image of a virtual scene at a first viewing angle when the terminal is located at the first position, and an object aiming identifier is displayed in the first image.

In step S2, the terminal determines a second viewing angle according to the first position, the second position and the first viewing angle, where a first variation quantity from the first viewing angle to the second viewing angle relates to a second variation quantity from the first position to the second position.

In step S3, the terminal displays a second image of the virtual scene at the second viewing angle when the terminal is located at the second position, where the object aiming identifier is also displayed in the second image.

Optionally, in this embodiment, the storage medium stores a computer program used to perform the following step S1.

In step S1, the terminal acquires an operation instruction for performing an operation on an aimed object in the virtual scene in a case that a display position of the object aiming identifier in the second image coincides with a display position of the aimed object.

Optionally, in this embodiment, the storage medium stores a computer program used to perform the following steps S1 and S2.

In step S1, the terminal acquires a control instruction generated by performing a control operation on a control region on the terminal, where the control instruction is used for controlling a target object in the virtual scene to perform an action.

In step S2, the terminal controls, in response to the control instruction, the target object to perform at least one of the following actions: a movement action, and an action on the displayed aimed object.

Optionally, in this embodiment, the storage medium stores a computer program used to perform the following steps S1 to S3.

In step S1, the terminal acquires the first variation quantity from the first position to the second position.

In step S2, the terminal acquires the second variation quantity according to the first variation quantity.

In step S3, the terminal controls a viewing angle to be varied from the first viewing angle to the second viewing angle according to the second variation quantity.

Optionally, in this embodiment, the storage medium stores a computer program used to perform the following steps S1 and S2.

In step S1, the terminal acquires a viewing angle adjustment sensitivity.

In step S2, the terminal determines the second variation quantity according to the first variation quantity and the viewing angle adjustment sensitivity.

Optionally, in this embodiment, the storage medium stores a computer program used to perform the following steps S1 to S3.

In step S1, the terminal detects a press instruction generated by performing a press operation on a region on the terminal.

In step S2, the terminal determines the viewing angle adjustment sensitivity as a first sensitivity in a case that the press instruction is detected.

In step S3, the terminal determines the viewing angle adjustment sensitivity as a second sensitivity in a case that the press instruction is not detected.

Optionally, in this embodiment, the storage medium stores a computer program used to perform the following steps S1 to S3.

In step S1, the terminal acquires a display mode of the terminal.

In step S2, the terminal determines the viewing angle adjustment sensitivity as a third sensitivity in a case that the display mode is a panorama mode.

In step S3, the terminal determines the viewing angle adjustment sensitivity as a fourth sensitivity in a case that the display mode is a partial mode.

Optionally, in this embodiment, the storage medium stores a computer program used to perform the following steps S1 and S2.

In step S1, the terminal acquires a product of the first variation quantity and the viewing angle adjustment sensitivity.

In step S2, the terminal controls the viewing angle to be varied from the first viewing angle to the second viewing angle according to the second variation quantity in a case that a magnitude of the product is greater than a preset threshold.

Optionally, for specific examples of this embodiment, one may refer to the examples described in Embodiment 1 and Embodiment 2, and details are not described herein again in this embodiment.

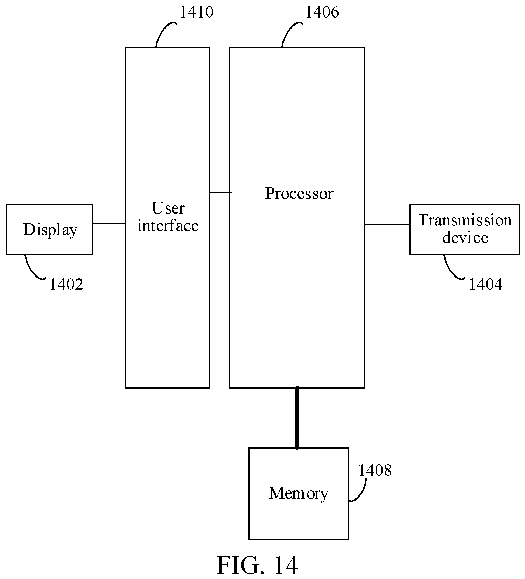

According to still another aspect of the embodiments of the present disclosure, an electronic device configured to implement the foregoing viewing angle adjustment method is further provided. As shown in FIG. 14, the electronic device includes a memory and a processor. The memory stores a computer program, and the processor is configured to execute the computer program to perform steps in any one of the foregoing method embodiments.

Optionally, in this embodiment, the electronic device may be located in at least one of multiple network devices in a computer network.

Optionally, in this embodiment, the processor may be configured to execute the computer program to perform the following steps S1 to S3.

In step S1, a terminal detects, by using a sensor in the terminal, that the terminal moves from a first position to a second position, where the terminal displays a first image of a virtual scene at a first viewing angle when the terminal is located at the first position, and an object aiming identifier is displayed in the first image.

In step S2, the terminal determines a second viewing angle according to the first position, the second position and the first viewing angle, where a first variation quantity from the first viewing angle to the second viewing angle relates to a second variation quantity from the first position to the second position.

In step S3, the terminal displays a second image of the virtual scene at the second viewing angle when the terminal is located at the second position, where the object aiming identifier is also displayed in the second image.

The memory 1408 may be configured to store a software program and a module, for example, a program instruction/module corresponding to the viewing angle adjustment method and device in the embodiments of the present disclosure. The processor 1406 performs various functional applications and data processing by running the software program and the module stored in the memory 1408, to implement the foregoing viewing angle adjustment method. The memory 1408 may include a high-speed random memory, and may further include a non-volatile memory such as one or more magnetic storage devices, a flash memory, or other non-volatile solid-state memory. In some examples, the memory 1408 may further include memories remotely disposed relative to the processor 1406. These remote memories may be connected to a terminal through a network. Instances of the network include, but are not limited to, the Internet, an intranet, a local area network, a mobile communications network, and a combination thereof.

The transmission device 1404 is configured to receive or send data through a network. Specific instances of the foregoing network may include a wired network and a wireless network. In an example, the transmission device 1404 includes a network interface controller (NIC). The NIC may be connected to another network device and a router by using a network cable, so as to communicate with the Internet or the local network. In an example, the transmission device 1404 is a radio frequency (RF) module, which is configured to communicate with the Internet in a wireless manner.

The memory 1408 is configured to store position information, image information, and the like.

A person of ordinary skill in the art may understand that, the structure shown in FIG. 14 is only schematic. The electronic device may be a terminal device such as a smartphone (such as an Android mobile phone or an iOS mobile phone), a tablet computer, a palmtop computer, a mobile Internet device (MID), or a PAD. FIG. 14 does not limit the structure of the foregoing electronic device. For example, the electronic device may include more or less components (such as a network interface, and the like) than those shown in FIG. 14, or have configuration different from that shown in FIG. 14.

In the foregoing embodiments of the present disclosure, the descriptions of the embodiments have their respective focuses. For a part that is not described in detail in an embodiment, reference may be made to related descriptions in other embodiments.

In the several embodiments provided in the present disclosure, it is understood that the disclosed client may be implemented in other manners. The described device embodiment is merely exemplary. For example, the unit division is merely logical function division and may be other division in actual implementation. For example, multiple units or components may be combined or integrated into another system, or some features may be ignored or not performed. In addition, the coupling, or direct coupling, or communication connection between the displayed or discussed components may be the indirect coupling or communication connection by means of some interfaces, units, or modules, and may be electrical or of other forms.

The units described as separate components may or may not be physically separate, and components displayed as units may or may not be physical units, may be located in one position, or may be distributed on multiple network units. Some or all of the units may be selected according to actual requirements to achieve the objectives of the solutions of the embodiments.

In addition, functional units in the embodiments of the present disclosure may be integrated into one processing unit, or each of the units may exist alone physically, or two or more units are integrated into one unit. The integrated unit may be implemented in the form of hardware, or may be implemented in the form of software functional unit.

The foregoing descriptions are merely optional implementations of the present disclosure. It is to be pointed out that a person of ordinary skill in the art may make several improvements or refinements without departing from the principle of the present disclosure and the improvements or refinements shall fall within the protection scope of the present disclosure.

**Industrial Applicability**

In the embodiments, a sensor in a terminal detects that the terminal moves from a first position to a second position, where the terminal displays a first image of a virtual scene at a first viewing angle when the terminal is located at the first position. A second viewing angle is determined according to the first position, the second position and the first viewing angle. A second image of the virtual scene is displayed at the second viewing angle. Therefore, the image of the virtual scene displayed at the viewing angle is adjusted according to the position variation of the terminal, without requiring the use of both hands to perform the screen sliding operation to control the display viewing angle of the terminal, so as to simplify the viewing angle adjustment operation of the terminal.

**Claims**

1. A viewing angle adjustment method, comprising:

    detecting, by a terminal by using a sensor in the terminal, that the terminal moves from a first position to a second position, wherein the terminal displays a first image of a virtual scene at a first viewing angle when the terminal is located at the first position, and wherein an object aiming identifier is displayed in the first image;
    determining, by the terminal, a second viewing angle according to the first position, the second position and the first viewing angle, wherein a first variation quantity from the first viewing angle to the second viewing angle relates to a second variation quantity from the first position to the second position; and

displaying, by the terminal, a second image of the virtual scene at the second viewing angle when the terminal is located at the second position, wherein the object aiming identifier is also displayed in the second image.

2. The method according to claim 1, wherein after the displaying, by the terminal, a second image of the virtual scene at the second viewing angle when the terminal is located at the second position, the method further comprises:
acquiring, by the terminal, an operation instruction for performing an operation on an aimed object in the virtual scene in a case that a display position of the object aiming identifier in the second image coincides with a display position of the aimed object.

3. The method according to claim 1, wherein while detecting, by using the sensor in the terminal, that the terminal moves from the first position to the second position, the method further comprises:

acquiring, by the terminal, a control instruction generated by performing a control operation on a control region on the terminal, wherein the control instruction is used for controlling a target object in the virtual scene to perform an action; and controlling, by the terminal in response to the control instruction, the target object to perform at least one of the following actions: a movement action, and an action on the displayed aimed object.

4. The method according to claim 1, wherein the determining, by the terminal, a second viewing angle according to the first position, the second position and the first viewing angle comprises:

acquiring, by the terminal, the first variation quantity from the first position to the second position;
acquiring, by the terminal, the second variation quantity according to the first variation quantity; and
controlling, by the terminal, a viewing angle to be varied from the first viewing angle to the second viewing angle according to the second variation quantity.

5. The method according to claim 4, wherein the acquiring, by the terminal, the second variation quantity according to the first variation quantity comprises:

acquiring, by the terminal, a viewing angle adjustment sensitivity; and
determining, by the terminal, the second variation quantity according to the first variation quantity and the viewing angle adjustment sensitivity.

6. The method according to claim 5, wherein the acquiring, by the terminal, a viewing angle adjustment sensitivity comprises:

detecting, by the terminal, a press instruction generated by performing a press operation on a region on the terminal;
determining, by the terminal, the viewing angle adjustment sensitivity as a first sensitivity in a case that the press instruction is detected; and
determining, by the terminal, the viewing angle adjustment sensitivity as a second sensitivity in a case that the press instruction is not detected, wherein the first sensitivity is less than the second sensitivity.

7. The method according to claim 5, wherein the acquiring, by the terminal, a viewing angle adjustment sensitivity comprises:

acquiring, by the terminal, a display mode of the terminal;
determining, by the terminal, the viewing angle adjustment sensitivity as a third sensitivity in a case that the display mode is a panorama mode; and
determining, by the terminal, the viewing angle adjustment sensitivity as a fourth sensitivity in a case that the display mode is a partial mode, wherein the third sensitivity is different from the fourth sensitivity.

8. The method according to claim 4, wherein the controlling, by the terminal, a viewing angle to be varied from the first viewing angle to the second viewing angle according to the second variation quantity comprises:

acquiring, by the terminal, a product of the first variation quantity and the viewing angle adjustment sensitivity; and
controlling, by the terminal, the viewing angle to be varied from the first viewing angle to the second viewing angle according to the second variation quantity in a case that a magnitude of the product is greater than a preset threshold.

9. A viewing angle adjustment device applied to a terminal, comprising:

a detection unit, configured to detect by using a sensor in the terminal, that the terminal moves from a first position to a second position, wherein the terminal displays a first image of a virtual scene at a first viewing angle when the terminal is located at the first position, and wherein an object aiming identifier is displayed in the first image;

a determining unit, configured to determine a second viewing angle according to the first position, the second position and the first viewing angle, wherein a first variation quantity from the first viewing angle to the second viewing angle relates to a second variation quantity from the first position to the second position; and
a display unit, configured to display a second image of the virtual scene at the second viewing angle when the terminal is located at the second position, wherein the object aiming identifier is also displayed in the second image.

10. The device according to claim 9, further comprising: an acquisition unit, configured to: after the second image of the virtual scene is displayed at the second viewing angle when the terminal is located at the second position, acquire an operation instruction for performing an operation on an aimed object in the virtual scene in a case that a display position of the object aiming identifier in the second image coincides with a display position of the aimed object.

11. The device according to claim 9, wherein the detection unit comprises:

a first acquisition module, configured to acquire a control instruction generated by performing a control operation on a control region on the terminal, wherein the control instruction is used for controlling a target object in the virtual scene to perform an action; and
a first control module, configured to control, in response to the control instruction, the target object to perform at least one of the following actions: a movement action, and an action on the displayed aimed object.

12. The device according to claim 9, wherein the determining unit comprises:

a second acquisition module, configured to acquire the first variation quantity from the first position to the second position;
a third acquisition module, configured to acquire the second variation quantity according to the first variation quantity; and
a second control module, configured to control a viewing angle to be varied from the first viewing angle to the second viewing angle according to the second variation quantity.

13. The device according to claim 12, wherein the third acquisition module comprises:

a first acquisition submodule, configured to acquire a viewing angle adjustment sensitivity; and
a first determining submodule, configured to determine the second variation quantity according to the first variation quantity and the viewing angle adjustment sensitivity.

14. The device according to claim 13, wherein the first acquisition submodule is configured to acquire the viewing angle adjustment sensitivity by the following operations:

detecting a press instruction generated by performing a press operation on a region on the terminal;
determining the viewing angle adjustment sensitivity as a first sensitivity in a case that the press instruction is detected; and
determining the viewing angle adjustment sensitivity as a second sensitivity in a case that the press instruction is not detected,
wherein the first sensitivity is less than the second sensitivity.

15. The device according to claim 13, wherein the first acquisition submodule is configured to acquire the viewing angle adjustment sensitivity by the following operations:

acquiring a display mode of the terminal;
determining the viewing angle adjustment sensitivity as a third sensitivity in a case that the display mode is a panorama mode; and
determining the viewing angle adjustment sensitivity as a fourth sensitivity in a case that the display mode is a partial mode,
wherein the third sensitivity is different from the fourth sensitivity.

16. The device according to claim 12, wherein the second control module comprises:

a third acquisition submodule, configured to acquire a product of the first variation quantity and the viewing angle adjustment sensitivity; and
a control submodule, configured to control the viewing angle to be varied from the first viewing angle to the second viewing angle according to the second variation quantity in a case that a magnitude of the product is greater than a preset threshold.

17. A storage medium, storing a program, wherein the program is used to, when being executed, perform the method according to any one of claims 1 to 8.

18. An electronic device, comprising a memory, a processor, and a computer program that is stored in the memory and executable by the processor, wherein the processor is configured to perform the method according to any one of claims 1 to 8 by executing

**EP 3 742 269 A1**

the computer program.

FIG. 1

| |
|---|
| A terminal detects, by using a sensor in the terminal, that the terminal moves from a first position to a second position, where the terminal displays a first image of a virtual scene at a first viewing angle when the terminal is located at the first position, and an object aiming identifier is displayed in the first image |

S202

| |
|---|
| The terminal determines a second viewing angle according to the first position, the second position and the first viewing angle, where a first variation quantity from the first viewing angle to the second viewing angle relates to a second variation quantity from the first position to the second position |

S204

| |
|---|
| The terminal displays a second image of the virtual scene at the second viewing angle when the terminal is located at the second position, where the object aiming identifier is also displayed in the second image |

S206

FIG. 2

FIG. 3

Target

Aiming crosshair

FIG. 4

FIG. 5

FIG. 6

FIG. 7

FIG. 8

FIG. 9

FIG. 10

FIG. 11

FIG. 12

Detection unit 1302

Determining unit 1304

Display unit 1306

Viewing angle adjustment device

FIG. 13

1410        1406

User interface

Processor

Display

1402

Transmission device

1404

Memory  1408

FIG. 14

## INTERNATIONAL SEARCH REPORT

| International application No. |
| --- |
| **PCT/CN2018/123990** |

**A. CLASSIFICATION OF SUBJECT MATTER**

G06F 3/048(2013.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPI, EPODOC, CNPAT, CNKI, IEEE, GOOGLE: 视角, 位置, 变化, 移动, 位移, 传感器, 感测器, view, angle, change, location, move, sensor

**C. DOCUMENTS CONSIDERED TO BE RELEVANT**

| Category* | Citation of document, with indication, where appropriate, of the relevant passages | Relevant to claim No. |
| --- | --- | --- |
| PX | CN 108211342 A (TENCENT TECHNOLOGY SHENZHEN CO., LTD.) 29 June 2018 (2018-06-29)<br>claims 1-18 | 1-18 |
| X | CN 102081493 A (ACER INC.) 01 June 2011 (2011-06-01)<br>description, paragraphs [0026]-[0038] | 1-18 |
| A | CN 107479804 A (GOERTEK INC.) 15 December 2017 (2017-12-15)<br>entire document | 1-18 |
| A | CN 107450747 A (TENCENT TECHNOLOGY SHENZHEN CO., LTD.) 08 December 2017 (2017-12-08)<br>entire document | 1-18 |
| A | CN 105148520 A (SHANGHAI JIAYOU NETWORK TECHNOLOGY CO., LTD.) 16 December 2015 (2015-12-16)<br>entire document | 1-18 |

☐ Further documents are listed in the continuation of Box C.　☑ See patent family annex.

| | |
| --- | --- |
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **15 March 2019** | **28 March 2019** |

| Name and mailing address of the ISA/CN | Authorized officer |
| --- | --- |
| **State Intellectual Property Office of the P. R. China (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

International application No.

**PCT/CN2018/123990**

| Patent document cited in search report | | | Publication date (day/month/year) | Patent family member(s) | | | Publication date (day/month/year) |
|---|---|---|---|---|---|---|---|
| CN | 108211342 | A | 29 June 2018 | None | | | |
| CN | 102081493 | A | 01 June 2011 | None | | | |
| CN | 107479804 | A | 15 December 2017 | None | | | |
| CN | 107450747 | A | 08 December 2017 | WO | 2019019968 | A1 | 31 January 2019 |
| | | | | CN | 107450747 | B | 18 September 2018 |
| CN | 105148520 | A | 16 December 2015 | None | | | |

Form PCT/ISA/210 (patent family annex) (January 2015)

**EP 3 742 269 A1**